Europäisches Patentamt

European Patent Office

Office européen des brevets

(19)

(11) Veröffentlichungsnummer: **0 254 709**
**A2**

(12) **EUROPÄISCHE PATENTANMELDUNG**

(21) Anmeldenummer: **87890111.5**

(22) Anmeldetag: **20.05.87**

(51) Int. Cl.⁴: **H 02 M 7/538**

(30) Priorität: **27.05.86 AT 1424/86**

(43) Veröffentlichungstag der Anmeldung:
**27.01.88 Patentblatt 88/04**

(84) Benannte Vertragsstaaten:
**BE CH DE ES FR GB IT LI NL SE**

(71) Anmelder: **AUSTRIA Antriebstechnik G. Bauknecht Aktiengesellschaft**
**G. Bauknecht-Strasse 1**
**A-8740 Zeltweg-Spielberg (Steiermark) (AT)**

(72) Erfinder: **Ott, Josef**
**Landschacherstrasse**
**A-8720 Knittelfeld-Apfelberg /Steiermark (AT)**

(74) Vertreter: **Beer, Manfred, Dipl.-Ing. et al**
**Patentanwälte Dipl.-Ing. Otto Beer, Dipl.-Ing. Manfred Beer Lindengasse 8, Postfach 462**
**A-1071 Wien (AT)**

(54) **Frequenzumrichter.**

(57) Zur einfachen Vermeidung von undefinierten Schaltzuständen der Drehstrombrücke (5) beim Einschaltvorgang eines Frequenzumrichters (6) wird die ungeregelte, zufolge von Innenwiderständen im Transformator und Gleichrichter eine gewisse Einschaltflanke aufweisende Versorgungsspannung der Regelelektronik über ein Zeitverzögerungsglied (21) einem Komparator (17) zugeführt, der bei Überschreitung eines Vergleichspegels ein Freigabesignal an die Leistungselektronik abgibt. Die Verzögerungszeit des Zeitverzögerungsgliedes (21) ist länger als die Zeit, die beim Einschalten der Spannungsversorgung der Regelelektronik bis zum Erreichen des Regelniveaus eines zugehörigen Spannungsreglers (26) vergeht, womit das Freigabesignal erst auftreten kann, wenn die Regelelektronik sich im eingeschwungenen Zustand befindet.

EP 0 254 709 A2

## Beschreibung

Frequenzumrichter

Die Erfindung betrifft einen Frequenzumrichter, mit einer steuerbare Leistungstransistoren aufweisenden Drehstrombrücke, und mit einer Verriegelungseinrichtung zur Vermeidung undefinierter Schaltzustände der Drehstrombrücke beim Einschaltvorgang.

Derartige Frequenzumrichter werden üblicherweise zur Steuerung von Drehstrom-Asynchronmotoren verwendet, wobei über die Drehstrombrücke das zum Betrieb des Motors erforderliche Drehfeld bereitgestellt bzw. gesteuert wird. Da die Regelelektronik für die Leistungstransistoren unmittelbar nach dem Einschalten noch nicht eingeschwungen ist, muß Vorkehrung getroffen werden, daß keine undefinierten Schaltzustände der Drehstrombrücke auftreten können.

Die bisher in diesem Zusammenhang bekannten Lösungen schalten daher erst nach eingeschwungenem Zustand der Elektronik den Leistungsteil über Relais oder Schütze zu, was aber relativ aufwendige und kostenintensive Anordnungen bedingt.

Aufgabe der vorliegenden Erfindung ist es, einen Frequenzumrichter der eingangs genannten Art so auszubilden, daß die genannten Nachteile der bekannten Anordnungen vermieden werden und daß insbesonders auf einfache und damit kostengünstige Weise sichergestellt werden kann, daß beim Einschaltvorgang des Frequenzumrichters keine undefinierten Schaltzustände der Drehstrombrücke auftreten können.

Dies wird gemäß der vorliegenden Erfindung dadurch erreicht, daß die Verriegelungseinrichtung einen Schalttransistor aufweist, der die Ansteuerung der Leistungstransistoren beim Anliegen eines Freigabesignals freigibt, daß die Basis des Schalttransistors mit dem Ausgang eines Komparators verbunden ist, dessen Signaleingang über ein Zeitverzögerungsglied mit der ungeregelten Spannungsversorgung für die Regelschaltung der Leistungstransistoren in Verbindung steht und dessen Vergleichseingang an einer Vergleichsspannung liegt, daß ein Spannungsregler für die Spannungsversorgung der Regelschaltung vorgesehen ist, und daß das Zeitverzögerungsglied eine Verzögerungszeit hat, die länger ist als die Zeit, die beim Einschalten der Spannungsversorgung bis zum Erreichen des Regelniveaus des Spannungsreglers vergeht. Beim Einschalten der Spannungsversorgung für die Regelelektronik der Leistungstransistoren (bedarfsweise kann diese Elektronik auch für die Steuerung oder Überwachung anderer Funktionen einer mit dem Frequenzumrichter ausgestatteten Maschine dienen) tritt - bedingt durch den Innenwiderstand von Transformator und Gleichrichter - eine bestimmte Anstiegsflanke auf, was eine bestimmte Zeit bis zum Erreichen des vom Spannungsregler geregelten Niveaus bedingt. Über das Zeitverzögerungsglied wird nun die ungeregelte Versorgungsspannung - also vor dem Spannungsregler abgezweigt - dem Signaleingang des Komparators zugeführt, was bedeutet, daß dieser erst ansprechen kann, wenn über die Spannungsversorgung die Regelschaltung bereits aktiviert bzw. die zugehörige Elektronik bereits in eingeschwungenem Zustand ist. Erst dann wird über den Ausgang des Komparators das Freigabesignal an den Schalttransistor abgegeben und damit die Leistungselektronik aktiviert. Diese einfachen Maßnahmen sichern also definierte Schaltzustände der Drehstrombrücke beim Einschaltvorgang, ohne daß über aufwendige zusätzliche Bauteile eine streng getrennte Einschaltung von Steuerelektronik und Leistungselektronik vorgenommen werden müßte.

Im wesentlichen ist damit also ein Frequenzumrichter, mit einer über einen Spannungsregler aus dem Netz gespeisten Steuerelektronik und einer aus dem gleichen Netz gespeisten Leistungselektronik, welche eine über die Steuerelektronik ansteuerbare Leistungstransistoren umfassende Drehstrombrücke aufweist, sowie mit einer Verriegelungseinrichtung, welche zur Vermeidung undefinierter Schaltzustände der Drehstrombrücke beim Einschaltvorgang die Leistungselektronik erst nach Beendigung der Einschwingvorgänge in der Steuerelektronik zuschaltet, gemäß der Erfindung so ausgebildet, daß die Leistungselektronik parallel zu der den Spannungsregler umfassenden Steuerelektronik an das speisende Netz angeschlossen ist, daß am Speiseeingang der Leistungselektronik ein Zeitverzögerungsglied vorgeschaltet ist, dessen Verzögerungszeit größer als die Dauer der Einschwingvorgänge in der Steuerelektronik ist, daß der Ausgang des Zeitverzögerungsgliedes dem Signaleingang eines Komparators zugeführt ist, an dessen Vergleichseingang eine Vergleichsspannung liegt, und daß der Ausgang des Komparators an die Basis eines im Ansteuerkreis jedes Leistungstransistors eingeschalteten Hilfstransistors gelegt ist, dessen Emitter an Masse liegt und dessen Kollektor mit der Basis des Leistungstransistors verbunden ist.

Nach einer bevorzugten Ausgestaltung der Erfindung weist das Zeitverzögerungsglied einen Widerstand mit einer parallel in Sperrichtung angeordneten Diode und einen ausgangsseitig zwischen Widerstand und Diode einerseits und Masse andererseits angeordneten Kondensator auf. Über den Kapazitätswert des Kondensators wird dabei im wesentlichen die Verzögerungszeit definiert; die Diode erlaubt beim Ausschalten der Spannungsversorgung eine schnelle Entladung des Kondensators und damit eine sichere Rücknahme des Freigabesignals wenn der Pegel der Spannungsversorgung unter den der Vergleichsspannung am Komparator fällt. Damit ist also auch beim Ausschalten die Leistungselektronik und damit die Drehstrombrücke bereits gesperrt bevor undefinierte Schaltzustände auftreten können.

Nach eine weiteren vorteilhaften Ausgestaltung der Erfindung ist die Vergleichsspannung für den Komparator über einen Spannungsteiler einstellbar, was auf einfache Weise die Anpassung beispielsweise an unterschiedliche Parameter der Spannungsversorgung od.dgl. erlaubt.

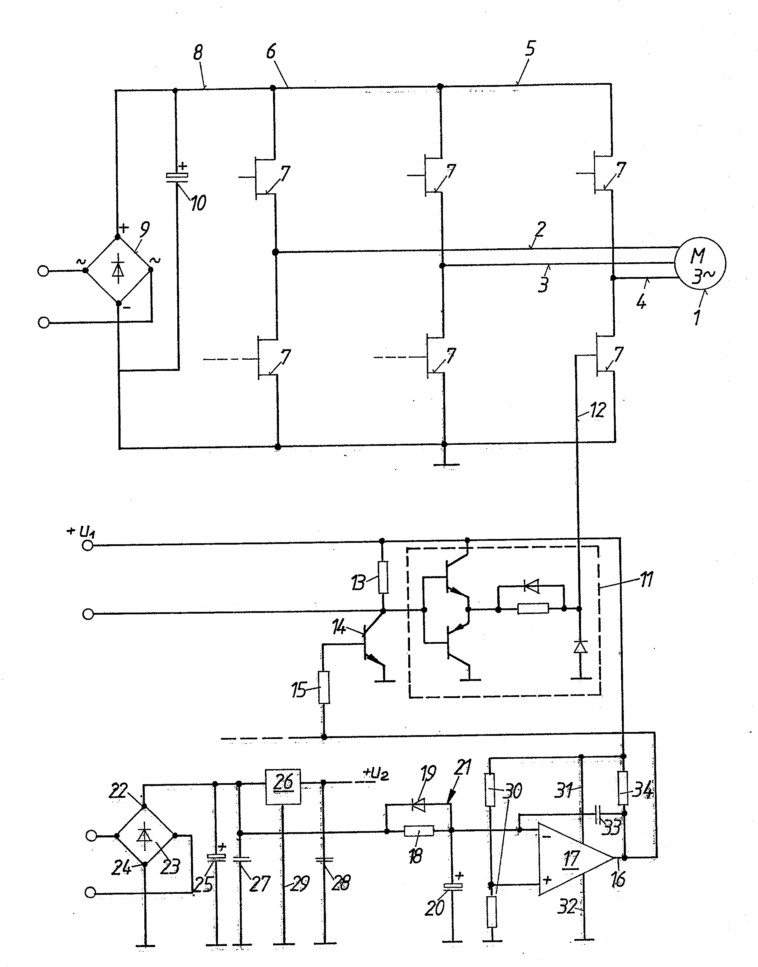

Die Erfindung wird im folgenden anhand des in der Zeichnung in einem teilweise schematischen Schaltbild dargestellten Ausführungsbeispiels näher erläutert.

Ein Drehstrom-Asynchronmotor I, der als Antriebsmotor für eine hier nicht dargestellte Maschine dient, ist über Versorgungsleitungen 2, 3, 4 mit der Drehstrombrücke 5 eines Frequenzumrichters 6 verbunden. Die sechs Leistungstransistoren 7 - z.B. FETs - sind auf hier nicht weiter dargestellte Weise mit einer Regelschaltung bzw. Steuerelektronik verbunden und erzeugen zufolge einer entsprechenden kontinuierlichen Umsteuerung aus der Gleichspannung des Gleichstromzwischenkreises 8 das zum Betrieb des Motors I erforderliche Drehfeld. Eingangsseitig ist ein vom Wechselstromnetz angespeister Gleichrichter 9 angeordnet, der über seine Gleichspannungsanschlüsse - zu denen parallel noch ein Siebkondensator IO geschaltet ist - mit dem Gleichstromzwischenkreis 8 verbunden ist.

Unterhalb der Drehstrombrücke 5 ist eine Treiberstufe II - angedeutet durch die strichlierte Umrandung - zu erkennen, die über eine Leitung I2 mit einem der Leistungstransistoren 7 verbunden ist und auf deren Funktion hier im einzelnen zur Vermeidung von Ausschweifungen nicht weiter eingegangen werden soll. Die Spannungsversorgung $U_1$ der Treiberstufe II ist über einen Widerstand I3 mit dem Kollektor eines Schalttransistors I4 verbunden, dessen Emitter an Masse liegt und dessen Basis über einen Widerstand I5 mit dem Ausgang I6 eines Komparators I7 in Verbindung steht.

Der Signaleingang (-) des Komparators I7 ist mit einem, einen Widerstand I8 mit parallel in Sperrichtung angeord neter Diode I9 und einen ausgangsseitig zwischen Widerstand I8 und Diode I9 einerseits und Masse anderseits angeordneten Kondensator 20 aufweisenden Zeitverzögerungsglied 2I verbunden, welches an der dem Komparator I7 abgewandten Eingangsseite mit einem ungeregelten Gleichspannungsausgang 22 eines Gleichrichters 23 in Verbindung steht. Der andere Gleichspannungsausgang 24 des Gleichrichters 23 liegt an Masse.

Von der Verbindungsleitung zwischen dem Gleichspannungsausgang 22 und dem Zeitverzögerungsglied 2I ausgehend ist einerseits ein an Masse liegender Siebkondensator 25 und anderseits ein Spannungsregler 26 angeordnet. Der Spannungsregler 26 ist eingangsseitig und ausgangsseitig über Kondensatoren 27, 28 an Masse gelegt und wie üblich über eine Leitung 29 mit Masse verbunden. Ausgangsseitig liefert der Spannungsregler 26 eine stabilisierte Gleichspannung $U_2$ für die Regelschaltung bzw. Regelelektronik mit der - neben unter Umständen weiteren Funktionen einer mit dem Motor I ausgerüsteten Maschine - das Drehfeld des Motors I gesteuert wird.

Der Vergleichseingang (+) des Komparators I7 ist über einen an Masse liegenden Spannungsteiler 30 mit der Spannungsquelle $U_1$ verbunden, welche über die Leitungen 3I, 32 auch unmittelbar zur Spannungsversorgung des Komparators I7 dient. Der Vollständigkeit halber ist auch noch auf einen Rückkopplungskondensator 33 zwischen dem Signaleingang (-) und dem Ausgang I6 des Komparators I7 sowie auf den Dampfungswiderstand 34 zwischen dem Ausgang I6 und der Versorgungsspannung $U_1$ zu verweisen.

Beim Einschalten der Versorgungsspannung des Gleichrichters 23 tritt - bedingt durch den Innenwiderstand eines vorgeschalteten Transformators bzw. des Gleichrichters selbst - eine bestimmte Anstiegsflanke in der an den Ausgängen 22, 24 erhaltenen Gleichspannung auf, sodaß eine bestimmte Zeit vergeht, bis das Regelniveau des Spannungsreglers 26 erreicht ist und die stabilisierte Spannung $U_2$ zur Verfügung steht. Über das Zeitverzögerungsglied 2I, dessen Verzögerungszeit länger ist als die genannte, bis zum zur Verfügung stehen der Spannung $U_2$ vergehende Zeit, wird sichergestellt, daß der Komparator I7 erst dann ein Ausgangssignal an den Schalttransistor I4 abgibt, wenn zufolge der bereits zur Verfügung stehenden Spannung $U_2$ die damit versorgte Elektronik eingeschwungen ist. Die Leistungselektronik wird also gleichzeitig mit der Regelelektronik eingeschaltet, wobei allerdings über das Zeitverzögerungsglied 2I von selbst die zur Sicherstellung von definierten Schaltzuständen der Drehstrombrücke erforderliche Verzögerung auftritt.

Beim Ausschalten der Versorgungsspannung am Gleichrichter 23 wird über die Diode I9 im Zeitverzögerungsglied 2I eine schnelle Entladung des Kondensators 20 ermöglicht, womit das Freigabesignal am Ausgang I6 des Komparators I7 zurückgenommen wird, wenn die Versorgungsspannung unter den über den Spannungsteiler 30 einstellbaren Wert fällt.

Abgesehen von der dargestellten Anordnung könnte der Schalttransistor I4 auch zwischen der Treiberstufe II und dem zugehörigen Leistungstransistor 7 angeordnet sein, was an sich nur eine hier nicht weiter interessierende Änderung der Ausgestaltung der Treiberstufe II selbst erfordern würde.

**Patentansprüche**

I. Frequenzumrichter (6), mit einer steuerbare Leistungstransistoren (7) aufweisenden Drehstrombrücke (5), und mit einer Verriegelungseinrichtung zur Vermeidung undefinierter Schaltzustände der Drehstrombrücke (5) beim Einschaltvorgang, dadurch gekennzeichnet, daß die Verriegelungseinrichtung einen Schalttransistor (I4) aufweist, der die Ansteuerung der Leistungstransistoren (7) beim Anliegen eines Freigabesignals freigibt, daß die Basis des Schalttransistors (I4) mit dem Ausgang (I6) eines Komparators (I7) verbunden ist, dessen Signaleingang (-) über ein Zeitverzögerungsglied (2I) mit der ungeregelten Spannungsversorgung für die Regelschaltung der Leistungstransistoren (7) in Verbindung steht und dessen Vergleichseingang (+) an einer Vergleichsspannung liegt, daß ein Spannungsregler (26) für die Spannungsversorgung der Regelschaltung vorgesehen ist, und daß das Zeitverzögerungsglied (2I) eine Verzögerungszeit hat, die länger ist als die Zeit, die beim Einschalten der Spannungsversorgung bis zum Erreichen des Regelniveaus des Spannungsreglers (26) vergeht.

2. Frequenzumrichter nach Anspruch I, dadurch gekennzeichnet, daß das Zeitverzögerungsglied (2I) einen Widerstand (I8) mit einer parallel in Sperrichtung angeordneten Diode (I9) und einen ausgangsseitig zwischen Widerstand (I8) und Diode (I9) einerseits und Masse anderseits angeordneten Kondensator (20) aufweist.

3. Frequenzumrichter nach Anspruch I oder 2, dadurch gekennzeichnet, daß die Vergleichsspannung für den Komparator (I7) über einen Spannungsteiler (30) einstellbar ist.

254709